# FASCICULE DE BREVET EUROPEEN

(11) **EP 2 469 067 B1**
(45) Date de publication et mention de la délivrance du brevet: **26.08.2015**
(21) Numéro de dépôt: 11193142.4
(22) Date de dépôt: 13.12.2011
(51) Int. Cl.: F02M 35/10, F02B 29/04

(54) **Carter pour module d'admission, notamment pour module d'admission de moteur thermique de véhicule automobile, et module d'admission comprenant un tel carter**
Gehäuse für ein Saugmodul, insbesondere für ein Saugmodul eines Verbrennungsmotors eines Kraftfahrzeugs, und ein ein solches Gehäuse umfassendes Saugmodul
Casing for intake module, in particular for the intake module of an automobile combustion engine, and intake module including such a casing

(30) Priorité: 22.12.2010 FR 1005039
(43) Date de publication de la demande: 27.06.2012
(73) Titulaire: Valeo Systèmes Thermiques, 78320 Le Mesnil-Saint-Denis (FR)
(72) Inventeur: Martins, Carlos, 78150 Le Chesnay (FR)
(74) Mandataire: Metz, Gaëlle

(56) Documents cités:
- FR-A1- 2 908 833
- FR-A1- 2 936 572

## Description

La présente invention concerne un carter pour module d'admission, notamment pour module d'admission de moteur thermique de véhicule automobile, et un module d'admission comprenant un tel carter.

Un tel module d'admission est connu de FR 2 2908 833 A1.

Un moteur thermique de véhicule automobile comporte une chambre de combustion, généralement formée par une pluralité de cylindres, dans laquelle un mélange d'air et de carburant est brûlé pour générer le travail du moteur. Les gaz admis dans la chambre de combustion, qui comprennent l'air, sont dénommés gaz d'admission.

Dans le cas de moteurs suralimentés, c'est-à-dire alimentés en air préalablement comprimé, ces gaz d'admission doivent être refroidis avant d'être introduits dans la chambre de combustion. Cette fonction est remplie par un échangeur de chaleur, appelé généralement refroidisseur d'air de suralimentation.

Dans certaines phases de fonctionnement du moteur, il est cependant nécessaire d'éviter un refroidissement des gaz d'admission. Il a ainsi déjà été proposé des circuits faisant by-pass et permettant aux gaz d'admission de ne pas passer par l'échangeur avant leur introduction dans le moteur.

Afin de réduire les émissions polluantes, il est également connu d'introduire dans le flux de gaz d'admission des gaz d'échappement dits "recirculés". Il s'agit de gaz d'échappement prélevés en aval de la chambre de combustion pour être réacheminés (recirculés) vers le flux de gaz d'admission, en amont de la chambre de combustion.

Cela étant, il peut être souhaitable de rapprocher au plus près le refroidisseur d'air de suralimentation du moteur en utilisant un collecteur de répartition par lequel le refroidisseur d'air de suralimentation est raccordée au moteur. Le refroidisseur débouche dans le collecteur qui est assujetti à la culasse du moteur et qui distribue les gaz d'admission en direction des cylindres par des conduits d'admission prévus dans la culasse. On parle alors de modules d'admission.

De nombreux modules ont déjà été proposés. Un besoin demeure cependant d'un module présentant une structure simplifiée tout en restant capable de gérer les différents flux de gaz d'admission. Un tel module doit par ailleurs permettre de limiter les pertes de charges et présenter un encombrement réduit.

L'invention propose de résoudre les problèmes précités et concerne à cette fin un carter pour module d'admission, notamment pour module d'admission de moteur thermique de véhicule automobile, ledit carter étant apte à accueillir un faisceau d'échange de chaleur, ledit carter comprenant une première entrée pour des gaz d'admission, dite entrée pour les gaz d'admission à refroidir, et une autre entrée pour lesdits gaz d'admission, dite entrée pour les gaz d'admission non-refroidis, ledit carter comprenant une boîte de sortie et étant configuré pour que les gaz d'admission, pénétrant par l'entrée pour les gaz d'admission à refroidir, traverse ledit faisceau pour déboucher dans la boîte de sortie.

Selon l'invention, ledit carter comprend en outre une entrée pour des gaz d'échappement recirculés et un conduit de distribution débouchant dans ladite boîte de sortie, en communication avec l'entrée pour les gaz d'admission non-refroidis et l'entrée pour les gaz d'échappement recirculés. Les gaz d'admission non-refroidis et les gaz d'échappement recirculés pénètrent ainsi dans la boîte de sortie du carter par une même voie, à savoir le conduit de distribution. On peut de la sorte simplifier la configuration du carter, en particulier de sa boîte de sortie.

Selon différents modes de mise en oeuvre, pris ensemble ou séparément:
- le conduit comprend une section de répartition, ladite section de répartition s'étendant en regard de la boîte de sortie,
- la boîte de sortie comprend des orifices de sortie des gaz d'admission et la section de répartition s'étend au moins en regard desdits orifices de sortie,
- le conduit comprend une section d'alimentation reliant ladite section de répartition et l'entrée pour les gaz d'admission non refroidis,
- ladite section d'alimentation débouche dans ladite section de distribution au niveau d'une zone médiane de cette dernière,
- l'entrée pour les gaz d'échappement recirculés débouche sur ladite section d'alimentation.

Selon un aspect de l'invention, ledit carter comprend un boîtier, apte à accueillir le faisceau d'échange de chaleur, et un couvercle, fermant ledit boîtier, ledit boîtier étant muni dudit conduit de distribution. En limitant le nombre de pièces du carter, on dispose ainsi d'un module d'admission dont la constitution est encore simplifiée. En prévoyant l'une des entrées des gaz d'admission sur le boîtier et l'autre sur le couvercle, on facilite en outre leur implantation.

Selon différents modes de mise en oeuvre de cet aspect de l'invention:
- le boîtier comprend une boîte d'entrée des gaz d'admission à refroidir débouchant du côté d'une face latérale dudit boîtier, dite face de raccordement, sur l'entrée pour les gaz d'admission à refroidir,
- l'entrée pour les gaz non-refroidis est située au droit de ladite face de raccordement,
- ledit couvercle comprend une paroi fermant ledit boîtier et ledit conduit est issu de matière de ladite paroi,
- le contour du conduit est apte à être fermé, au moins localement, en particulier au niveau de ladite section d'alimentation, par une plaque terminale du faisceau de l'échangeur, destinée à venir en appui contre ladite paroi.

L'invention concerne aussi un module d'admission comprenant un carter tel que décrit plus haut et un faisceau d'échange de chaleur situé dans ledit carter.

Ledit module comprend, par exemple, une tubulure d'admission des gaz d'échappement reciculés, montée sur ledit carter.

Ledit module pourra aussi comprendre :
- une ou des vannes doseuses du débit de gaz d'admission en communication avec l'entrée pour les gaz d'admission à refroidir et/ou l'entrée pour les gaz d'admission non refroidis, et/ou
- une tubulure d'extension, montée entre le carter et la ou les vannes doseuses.

L'invention sera mieux comprise à la lumière de la description suivante qui n'est donnée qu'à titre indicatif et qui n'a pas pour but de la limiter, accompagnée des dessins joints parmi lesquels :
- la figure 1 est une vue éclatée, en perspective, d'un un exemple de module d'admission conforme à l'invention,
- la figure 2 est une vue de dessus du module de la figure 1,
- la figure 3 est une vue de coupe selon la ligne III-III de la figure 2,
- la figure 4 est une vue de coupe selon la ligne IV-IV de la figure 2,
- la figure 5 est une vue de dessous du couvercle du module de la figure 1.

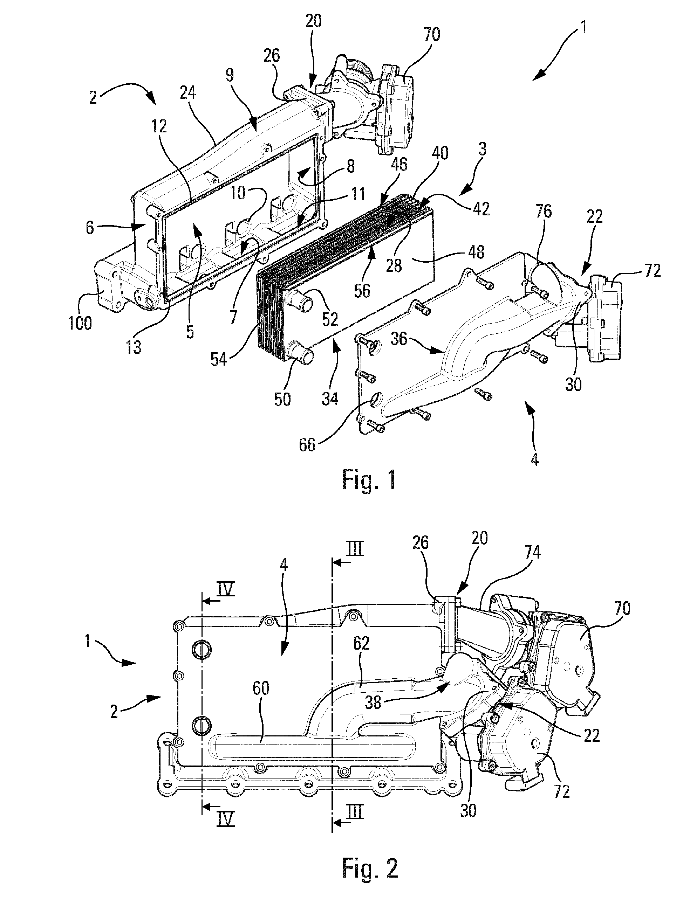

Comme illustré aux figures 1 et 2, l'invention concerne tout d'abord un carter 1 pour module d'admission, notamment pour module d'admission de moteur thermique de véhicule automobile.

Ledit carter 1 est prévu apte à accueillir un faisceau d'échange de chaleur 3. Il comprend, par exemple, un boîtier 2, apte à accueillir ledit faisceau 3, et un couvercle 4, fermant ledit boîtier 2.

Le boîtier 2 présente, par exemple une forme sensiblement parallélépipédique avec une paroi de fond 5, et quatre parois latérales 6, 7, 8, 9. La paroi de fond 5 est munie, notamment, d'orifices 10 de sortie des gaz d'admission. Ils sont, par exemple, groupés par paire, chaque paire étant destinée à être raccordée aux conduits d'admission de la culasse du moteur communiquant avec l'un des cylindres de ce dernier. Dans chaque paire, l'un des orifices est de section sensiblement circulaire et l'autre de section sensiblement rectangulaire.

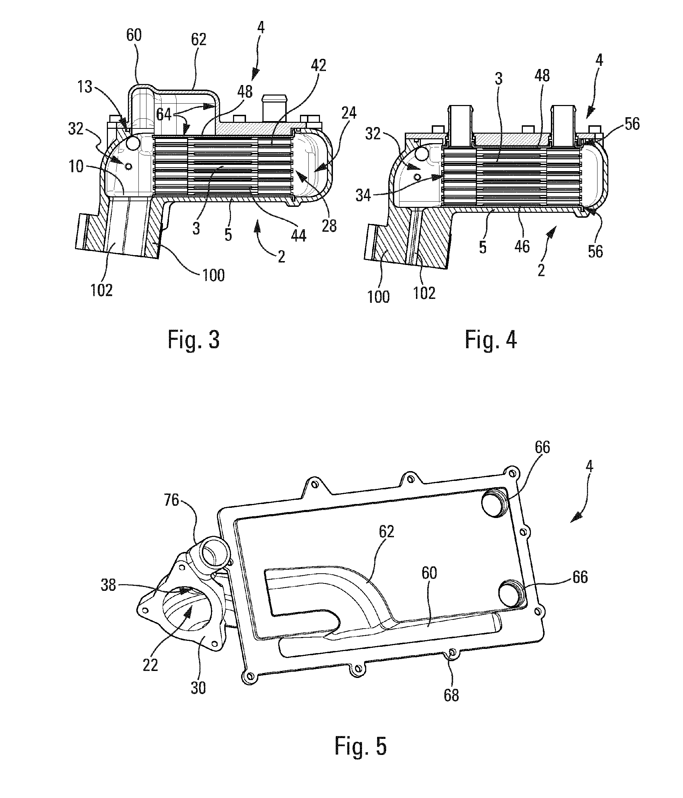

Ledit boîtier 2 pourra être munie d'une embase 100 dans laquelle des pipes d'admission 102 (visibles figures 3 et 4) prévues en regard desdits orifices de sortie 10 sont réalisées pour mettre ces derniers en communication avec les conduits d'admission de la culasse. Ledit carter, en particulier ledit boîtier 2, est configuré de façon à pouvoir être fixé à la culasse du moteur, notamment par l'intermédiaire de ladite embase 100.

Le boîtier 2 présente également une ouverture 11, située en regard de la paroi de fond 5, pour l'introduction du faisceau d'échange de chaleur 3. Ledit boîtier comprend, par exemple, une bride 12 bordant ladite ouverture 11. Ladite bride 12 présente une gorge 13, apte à loger un joint, non représenté, destiné à faire étanchéité entre ledit boîtier 2 et le couvercle 4.

Le faisceau d'échange de chaleur 3 permet un échange de chaleur entre un premier fluide, ici les gaz d'admission à refroidir, avec un second fluide qui pourra être un liquide de refroidissement, notamment un liquide antigel tel qu'un mélange d'eau et de glycol. Le second fluide provient, par exemple, d'un circuit de refroidissement dit basse température du véhicule.

Dans le mode de réalisation illustré, le faisceau d'échange de chaleur 3 comporte un empilement de plaques 40 parallèles entre elles.

Les plaques 40 sont, par exemple, de forme générale rectangulaire avec deux grands cotés et deux petits cotés et sont disposées par paires. Les plaques 40 pourront, par exemple, être des plaques embouties.

L'espace aménagé entre deux plaques 40 prévues en vis-à-vis de deux paires de plaques 40 voisines permet de définir des premiers canaux 42 pour la circulation du premier fluide, qui est ici, pour rappel, le gaz d'admission à refroidir.

Des intercalaires ondulés, non visibles, pourront être disposés à chaque fois dans les premiers canaux 42. Ils sont brasés aux plaques 40 et ont pour fonction de perturber les gaz d'admission à refroidir de manière à ce que celui-ci échange plus de chaleur avec le second fluide.

L'espacement entre les deux plaques 40 formant une paire de plaques permet de définir un second canal 44 (visible aux figures 3 et 4) pour la circulation du second fluide. Autrement dit, le faisceau d'échange de chaleur 3 comporte un empilement de plaques 40 déterminant des premiers canaux 42 pour la circulation d'un premier fluide et des seconds canaux 44 pour la circulation d'un second fluide. Lesdites plaques 40 pourront être munies de bords relevés 54, le long des côtés des plaques parallèles au flux de gaz d'admission à refroidir dans le faisceau.

Le faisceau 3 d'échange de chaleur pourra en outre comporter deux plaques d'extrémité respectivement appelées première 46 et deuxième 48 plaques d'extrémité.

Une fois le faisceau d'échange de chaleur 3 monté dans le boîtier 2, la première plaque d'extrémité 46 est en contact avec la paroi de fond 5 et/ou la deuxième plaque d'extrémité 48 est en contact avec le couvercle 4. Lesdites plaques d'extrémité pourront aussi comprendre des bords rabattus 56, prévus le long de l'un des côtés desdites plaques 40, orthogonale à la direction du flux de gaz d'admission à refroidir dans le faisceau 3. Lesdits bords rabattus 56 renforce l'étanchéité et facilite le positionnement du faisceau dans le boîtier 2.

Le faisceau 3 comporte aussi, par exemple, des tubulures 50 et 52, notamment prévues au niveau de la deuxième plaque d'extrémité 48. Ces tubulures servent, ici, respectivement d'entrée et de sortie pour le second fluide.

Ledit carter 1 comprend en outre une première entrée 20 pour des gaz d'admission, dite entrée pour les gaz d'admission à refroidir, et une autre entrée 22 pour lesdits gaz d'admission, dite entrée pour les gaz d'admission non-refroidis. Ledit carter 1 comprend également une boîte de sortie 32 (mieux visible aux figures 3 et 4) et il est configuré pour que les gaz d'admission, pénétrant par l'entrée 20 pour les gaz d'admission à refroidir, traverse le faisceau 3 pour déboucher dans ladite boîte de sortie 32.

Selon l'invention, ledit carter 1 comprend en outre une entrée 38 pour des gaz d'échappement recirculé et un conduit de distribution 36 débouchant dans ladite boîte de sortie 32, en communication avec l'entrée pour les gaz d'admission non-refroidis 22 et l'entrée pour les gaz d'échappement recirculés 38. Autrement dit, le conduit 36 met en communication l'entrée pour les gaz non refroidis 22 et l'entrée 38 pour les gaz d'échappement recirculés avec la boîte de sortie 32. On réalise de la sorte une arrivée commune pour les gaz d'admission non-refroidis et les gaz d'échappement recirculés.

Les gaz d'admission à refroidir ayant traversés le faisceau 3 débouche dans la boîte de sortie 32 par une face de sortie 34 de celui-ci. Ladite boîte de sortie 32 est délimitée, par exemple, par une partie de la paroi de fond 5, une partie de la paroi de raccordement 8, une partie de la paroi opposé 6 du boîtier, la paroi latérale opposée restante 7 et une partie du couvercle 4. Les orifices de sortie 10 sont prévus au niveau de ladite boîte de sortie 32. Autrement dit, ladite boîte de sortie 32 forme un collecteur de répartition des gaz d'admission dans la culasse.

Le conduit 36 comprend, par exemple, une section de répartition 60, ladite section de répartition s'étendant en regard de la boîte de sortie 32, par exemple en regard desdits orifices de sortie 10. Il pourra aussi comprendre une section d'alimentation 62 reliant ladite section de répartition 60 et l'entrée pour les gaz d'admission non refroidis 22.

Ladite section d'alimentation 62 débouche dans ladite section de distribution 60, notamment, au niveau d'une zone médiane de cette dernière, selon sa direction d'extension longitudinale.

L'entrée 38 pour les gaz d'échappement recirculés est prévue, par exemple, au niveau de ladite section d'alimentation 62, notamment à proximité d'une bride de raccordement 30 de l'entrée pour les gaz d'admission non-refroidis.

Selon un aspect de l'invention, ledit boîtier 2 est muni de la première entrée 20 pour les gaz d'admission et le couvercle 4 est muni dudit conduit 36. Autrement dit, ledit carter 1 est configuré pour que les gaz d'admission pénétrant dans le boîtier 2 par l'entrée 20 pour les gaz d'admission à refroidir traverse le faisceau 3 tandis que les gaz d'admission pénétrant par l'entrée 22 pour les gaz d'admission non-refroidis, côté couvercle 4, ressortent du carter 1 en évitant le faisceau.

Le boîtier 2 comprend, par exemple, une boîte d'entrée 24 des gaz d'admission à refroidir débouchant du côté d'une 8 des faces latérales de l'échangeur, dite face de raccordement, sur l'entrée 20 pour les gaz d'admission à refroidir. Elle pourra être munie à ce niveau d'une bride de raccordement 26 se trouvant sensiblement dans le plan de la paroi de raccordement 8.

La boîte d'entrée 24 est délimitée, par exemple, par l'une 9 des parois latérales du boîtier, présentant une section en U. Ladite boîte d'entrée 24 présente, notamment, une forme évasée de section allant en diminuant depuis l'entrée 20 pour les gaz à refroidir jusqu'à l'extrémité longitudinale opposée. Elle débouche sur une face d'entrée 28 de l'échangeur.

L'entrée 22 pour les gaz non-refroidis est située, par exemple au droit de ladite face de raccordement 8.

Comme illustré à la figure 3, ledit couvercle 4 comprend une paroi fermant ledit boîtier 2 et ledit conduit 36 est issu de matière de ladite paroi.

Selon un aspect de l'invention, le contour 64 de ladite section d'alimentation 62 du conduit est apte à être fermé par la plaque d'extrémité 48 du faisceau de l'échangeur destinée à venir en appui contre ladite paroi du couvercle 4.

Comme illustré à la figure 5, le couvercle pourra également être muni d'orifices 66 pour le passage des tubulures 50, 52 du faisceau. Il pourra encore être pourvu d'orifices 68 pour sa fixation sur le boîtier 2.

Si l'on se reporte à nouveau aux figures 1 et 2, on constate que l'invention concerne également un module d'admission. Ce dernier comprend un carter 1 et un faisceau d'échange de chaleur 3, tels que décrit plus haut.

Le module pourra comporter en outre :
- une vanne doseuse 70, 72 du débit de gaz d'admission en communication avec l'entrée pour les gaz d'admission à refroidir et/ou l'entrée pour les gaz d'admission non refroidis, et/ou
- une tubulure d'extension 74 montée entre la boîte d'entrée 24 et la vanne doseuse 70 associée, et/ou
- une tubulure 76 d'admission des gaz d'échappement reciculés, montée sur ledit carter, notamment au niveau de ladite section d'alimentation 62.

Le faisceau d'échange de chaleur est réalisé, par exemple, en aluminium et/ou alliage d'aluminium.

Le boîtier et le carter sont, par exemple, des pièces de fonderie, par exemple en aluminium et/ou alliage d'aluminium. On pourrait aussi envisager un boîtier en plastique, voir même un boîtier en plastique et un couvercle en aluminium.

## Revendications

1. Carter pour module d'admission, notamment pour module d'admission de moteur thermique de véhicule automobile, ledit carter (1) étant apte à accueillir un faisceau d'échange de chaleur (3), ledit carter (1) comprenant une première entrée (20) pour des gaz d'admission, dite entrée pour les gaz d'admission à refroidir, et une autre entrée (22) pour lesdits gaz d'admission, dite entrée pour les gaz d'admission non-refroidis, ledit carter (1) comprenant une boîte de sortie (32) et étant configuré pour que les gaz d'admission, pénétrant par l'entrée (20) pour les gaz d'admission à refroidir, traverse le faisceau (3) pour déboucher dans la boîte de sortie (32), ledit carter (1) comprenant en outre une entrée (38) pour des gaz d'échappement recirculés et un conduit de distribution (36) débouchant dans ladite boîte de sortie (32), en communication avec l'entrée pour les gaz d'admission non-refroidis (22) et l'entrée pour les gaz d'échappement recirculés (38) **caractérisé en ce que** le conduit de distribution (36) met en communication ladite entrée pour les gaz non refroidis (22) et ladite entrée (38) pour les gaz d'échappement recirculés avec ladite boîte de sortie (32) de manière à réaliser une arrivée commune pour les gaz d'admission non-refroidis et les gaz d'échappement recirculés.

2. Carter selon la revendication 1 dans lequel le conduit (36) comprend une section de répartition (60), ladite section de répartition (60) s'étendant en regard de la boîte de sortie (32).

3. Carter selon la revendication 2 dans lequel la boîte de sortie (32) comprend des orifices de sortie des gaz d'admission (10) et la section de répartition (60) s'étend au moins en regard desdits orifices de sortie (10).

4. Carter selon l'une quelconque des revendications 2 ou 3 dans lequel le conduit (36) comprend une section d'alimentation (62) reliant ladite section de répartition (60) et l'entrée (22) pour les gaz d'admission non refroidis.

5. Carter selon la revendication 4 dans lequel ladite section d'alimentation (62) débouche dans ladite section de distribution (60) au niveau d'une zone médiane de cette dernière.

6. Carter selon l'une quelconque des revendications 4 ou 5 dans lequel l'entrée (38) pour les gaz d'échappement recirculés débouche sur ladite section d'alimentation (62).

7. Carter selon l'une quelconque des revendications précédentes comprenant un boîtier (2), apte à accueillir le faisceau d'échange de chaleur (3), et un couvercle (4), fermant ledit boîtier (2), ledit boîtier (2) étant muni de l'entrée (20) pour les gaz d'admission à refroidir et le couvercle (4) étant muni dudit conduit de distribution (36).

8. Carter selon la revendication 7 dans lequel le boîtier (2) comprend une boîte d'entrée (24) des gaz d'admission à refroidir débouchant du côté d'une face latérale (8) dudit boîtier (2), dite face de raccordement, sur l'entrée (20) pour les gaz d'admission à refroidir.

9. Carter selon la revendication 8 dans lequel l'entrée (22) pour les gaz non-refroidis est située au droit de ladite face de raccordement (8).

10. Carter selon l'une quelconque des revendications 7 à 9 dans lequel ledit couvercle (4) comprend une paroi fermant ledit boîtier (2) et ledit conduit (36) est issu de matière de ladite paroi.

11. Carter selon la revendication 10 dans lequel le contour du conduit (36) est apte à être fermé, au moins localement, par une plaque terminale (48) du faisceau (3) de l'échangeur, destinée à venir en appui contre ladite paroi.

12. Module d'admission comprenant un carter (1) selon l'une quelconque des revendications précédentes et un faisceau d'échange de chaleur (3) situé dans ledit carter (1).

13. Module selon la revendication 12 comprenant une tubulure d'admission (76) des gaz d'échappement reciculés, montée sur ledit carter (1).

14. Module selon l'une quelconque des revendications 12 ou 13 comprenant en outre une ou des vannes (70, 72) doseuses du débit de gaz d'admission, en communication avec l'entrée (20) pour les gaz d'admission à refroidir et/ou l'entrée (22) pour les gaz d'admission non refroidis.

15. Module selon la revendication 14 comprenant une tubulure d'extension (74), montée entre le carter (1) et la ou les vannes doseuses (70, 72).

## Patentansprüche

1. Gehäuse für ein Saugmodul, insbesondere für ein Saugmodul eines Verbrennungsmotors eines Kraftfahrzeugs, wobei das Gehäuse (1) angepasst ist, um ein Wärmeaustausch-Rohrbündel (3) aufzunehmen, wobei das Gehäuse (1) einen ersten Eingang (20) für Sauggase, Eingang für zu kühlende Sauggase genannt, und einen anderen Eingang (22) für die Sauggase, Eingang für die nicht gekühlten Sauggase genannt, umfasst, wobei das Gehäuse (1) einen Ausgangskasten (32) umfasst und derart ausgelegt ist, dass die Sauggase, die durch den Eingang (20) für die zu kühlenden Sauggase eintreten, das Rohrbündel (3) durchqueren, um in den Ausgangskasten (32) zu münden, wobei das Gehäuse (1) außerdem einen Eingang (38) für rückgeführte Abgase und eine Verteilungsleitung (36) umfasst, die in den Ausgangskasten (32) mündet, in Verbindung mit dem Eingang für die nicht gekühlten Sauggase (22) und dem Eingang für die rückgeführten Abgase (38), **dadurch gekennzeichnet, dass** die Verteilungsleitung (36) den Eingang für die nicht gekühlten Gase (22) und den Eingang (38) für die rückgeführten Abgase mit dem Ausgangskasten (32) derart verbindet, dass eine gemeinsame Ankunft für die nicht gekühlten Sauggase und die rückgeführten Abgase hergestellt wird.

2. Gehäuse nach Anspruch 1, bei dem die Leitung (36) einen Verteilungsabschnitt (60) umfasst, wobei sich der Verteilungsabschnitt (60) gegenüber dem Ausgangskasten (32) erstreckt.

3. Gehäuse nach Anspruch 2, bei dem der Ausgangskasten (32) Ausgangsöffnungen (10) der Sauggase umfasst, und sich der Verteilungsabschnitt (60) mindestens gegenüber den Ausgangsöffnungen (10) erstreckt.

4. Gehäuse nach einem der Ansprüche 2 oder 3, bei dem die Leitung (36) einen Versorgungsabschnitt (62) umfasst, der den Verteilungsabschnitt (60) und den Eingang (22) für die nicht gekühlten Sauggase verbindet.

5. Gehäuse nach Anspruch 4, bei dem der Versorgungsabschnitt (62) in den Verteilungsabschnitt (60) im Bereich einer Mittenzone dieses Letzteren mündet.

6. Gehäuse nach einem der Ansprüche 4 oder 5, bei dem der Eingang (38) für die rückgeführten Abgase auf dem Versorgungsabschnitt (62) mündet.

7. Gehäuse nach einem der vorhergehenden Ansprüche, das eine Box (2) umfasst, die geeignet ist, um das Wärmeaustausch-Rohrbündel (3) aufzunehmen, und einen Deckel (4), der die Box (2) verschließt, wobei die Box (2) mit dem Eingang (20) für die zu kühlenden Sauggase und der Deckel (4) mit der Verteilungsleitung (36) versehen ist.

8. Gehäuse nach Anspruch 7, bei dem die Box (2) einen Eingangskasten (24) der zu kühlenden Sauggase, der auf der Seite einer seitlichen Fläche (8) der Box (2), Anschlussfläche auf dem Eingang (20) für die zu kühlenden Sauggase genannt, mündet, umfasst.

9. Gehäuse nach Anspruch 8, bei dem der Eingang (22) für die nicht gekühlten Gase im rechten Winkel zu der Anschlussfläche (8) liegt.

10. Gehäuse nach einem der Ansprüche 7 bis 9, bei dem der Deckel (4) eine Wand, die die Box (2) verschließt, umfasst, und wobei die Leitung (36) aus dem Werkstoff der Wand besteht.

11. Gehäuse nach Anspruch 10, bei dem die Kontur der Leitung (36) angepasst ist, um mindestens stellenweise durch eine Endplatte (48) des Rohrbündels (3) des Austauschers, die dazu bestimmt ist, an der Wand zum Anliegen zu kommen, verschlossen zu werden.

12. Saugmodul, das ein Gehäuse (1) nach einem der vorhergehenden Ansprüche und ein Wärmeaustausch-Rohrbündel (3), das sich in dem Gehäuse (1) befindet, umfasst.

13. Modul nach Anspruch 12, das einen Saugrohrstutzen (76) der rückgeführten Abgase, der auf das Gehäuse (1) montiert ist, umfasst.

14. Modul nach einem der Ansprüche 12 oder 13, das außerdem einen oder mehrere Dosierschieber (70, 72) des Sauggasdurchflusses in Verbindung mit dem Eingang (20) für die zu kühlenden Sauggase und/oder dem Eingang (22) für die nicht gekühlten Sauggase umfasst.

15. Modul nach Anspruch 14, das einen Erweiterungsrohrstutzen (74) umfasst, der zwischen dem Gehäuse (1) und dem oder den Dosierschiebern (70, 72) montiert ist.

## Claims

1. Casing for an intake module, in particular for a motor vehicle combustion engine intake module, the said casing (1) being able to accommodate a heat exchange bundle (3), the said casing (1) comprising a first inlet (20) for intake gases, termed inlet for the intake gases to be cooled, and another inlet (22) for the said intake gases, termed inlet for the non-cooled intake gases, the said casing (1) comprising an outlet box (32) and being configured so that the intake gases, entering through the inlet (20) for the intake gases to be cooled, pass through the bundle (3) to emerge in the outlet box (32), the said casing (1) additionally comprising an inlet (38) for recirculated exhaust gases and a distribution duct (36) opening into the said outlet box (32), in communication with the inlet (22) for the non-cooled intake gases and the inlet (38) for the recirculated exhaust gases, **characterized in that** the distribution duct (36) places the said inlet (22) for the non-cooled gases and the said inlet (38) for the recirculated exhaust gases in communication with the said outlet box (32) so as to produce a common inlet for the non-cooled intake gases and the recirculated exhaust gases.

2. Casing according to Claim 1 in which the duct (36) comprises a distribution section (60), the said distribution section (60) extending opposite the outlet box (32).

3. Casing according to Claim 2, in which the outlet box (32) comprises outlet orifices (10) for the intake gases and the distribution section (60) extends at least opposite the said outlet orifices (10).

4. Casing according to either one of Claims 2 and 3, in which the duct (36) comprises a supply section (62) connecting the said distribution section (60) and the inlet (22) for the non-cooled intake gases.

5. Casing according to Claim 4, in which the said supply section (62) opens into the said distribution section (60) at a median zone of the latter.

6. Casing according to either one of Claims 4 and 5, in which the inlet (38) for the recirculated exhaust gases opens onto the said supply section (62).

7. Casing according to any one of the preceding claims comprising a housing (2) able to accommodate the heat exchange bundle (3), and a cover (4) closing the said housing (2), the said housing (2) being provided with the inlet (20) for the intake gases to be cooled and the cover (4) being provided with the said distribution duct (36) .

8. Casing according to Claim 7, in which the housing (2) comprises an inlet box (24) for the intake gases to be cooled which opens on a lateral face (8) side of the said housing (2), termed connecting face, onto the inlet (20) for the intake gases to be cooled.

9. Casing according to Claim 8, in which the inlet (22) for the non-cooled gases is situated in line with the said connecting face (8).

10. Casing according to any one of Claims 7 to 9, in which the said cover (4) comprises a wall closing the said housing (2) and the said duct (36) is produced in one piece with the said wall.

11. Casing according to Claim 10, in which the contour of the duct (36) is able to be closed, at least locally, by a terminal plate (48) of the bundle (3) of the exchanger that is intended to bear against the said wall.

12. Intake module comprising a casing (1) according to any one of the preceding claims and a heat exchange bundle (3) situated in the said casing (1).

13. Module according to Claim 12 comprising an intake pipe (76) for the recirculated exhaust gases that is mounted on the said casing (1).

14. Module according to either one of Claims 12 and 13 additionally comprising one or more metering valves (70, 72) which meter the flow of intake gases, in communication with the inlet (20) for the intake gases to be cooled and/or the inlet (22) for the non-cooled intake gases.

15. Module according to Claim 14 comprising an extension pipe (74) mounted between the casing (1) and the metering valve or valves (70, 72).
